# EUROPÄISCHE PATENTSCHRIFT

(11) **EP 1 504 231 B1**
(45) Veröffentlichungstag und Bekanntmachung des Hinweises auf die Patenterteilung: **25.01.2006**
(21) Anmeldenummer: 03747098.6
(22) Anmeldetag: 11.04.2003
(51) Int. Cl.: F28F 9/02, F02M 25/07

(54) **ABGASWÄRMEÜBERTRAGER, INSBESONDERE FÜR KRAFTFAHRZEUGE**
EXHAUST HEAT EXCHANGER IN PARTICULAR FOR MOTOR VEHICLES
ECHANGEUR DE CHALEUR DE GAZ D'ECHAPPEMENT, DESTINE EN PARTICULIER A UN VEHICULE AUTOMOBILE

(30) Priorität: 25.04.2002 DE 10218521
(43) Veröffentlichungstag der Anmeldung: 09.02.2005
(73) Patentinhaber: Behr GmbH & Co. KG, 70469 Stuttgart (DE)
(72) Erfinder: JUSCHKA, Winfried, 70197 Stuttgart (DE); LUTZ, Rainer,, 73266 Bietigheim (DE)
(86) Internationale Anmeldenummer: PCT/EP2003/003769
(87) Internationale Veröffentlichungsnummer: WO 2003/091650

(56) Entgegenhaltungen:
- CH-A- 98 648
- DE-A- 3 502 116
- GB-A- 315 934
- GB-A- 2 096 758
- US-A- 1 780 837
- US-A- 1 809 910
- US-A- 3 494 414
- US-A- 3 907 030
- US-A- 5 020 587

## Beschreibung

Die Erfindung betrifft einen Abgaswärmeübertrager, insbesondere für Kraftfahrzeuge mit Abgasrückführung (AGR), bestehend aus einem Gehäusemantel für ein Kühlmittel und aus einem von Abgas auf der Innenseite durchströmten und von dem Kühlmittel auf der Außenseite umströmten Rohrbündel, welches über Rohrböden im Gehäusemantel aufgenommen ist, wobei Rohrbündel, Rohrböden und Gehäusemantel einen in sich geschlossenen Kraftfluss bilden - ein solcher Abgaswärmeübertrager wurde durch die DE-A 199 07 163 der Anmelderin bekannt.

Dieser bekannte Abgaswärmeübertrager ist ein Abgaskühler, wie er in Kraftfahrzeugen bei der Abgasrückführung zur Kühlung der heißen Abgase eingesetzt wird. Der aus Edelstahl hergestellte Abgaskühler besteht im Wesentlichen aus einem Gehäuse mit einem Gehäusemantel, durch welches ein Kühlmittel strömt, welches dem Kühlkreislauf des Verbrennungsmotors des Kraftfahrzeuges entnommen wird. In dem Gehäusemantel ist ein Rohrbündel angeordnet, dessen Rohrenden von Rohrböden aufgenommen werden, die ihrerseits mit dem Gehäusemantel verbunden sind. Die Rohrenden sind mit den Rohrböden dicht verschweißt, und die Rohrböden sind umfangseitig mit dem Gehäusemantel verschweißt. Insofern bilden die beiden Rohrböden mit dem Gehäusemantel jeweils so genannte Festlager. Beim Betrieb dieses Abgaskühlers erwärmen sich Rohre und Gehäusemantel unterschiedlich, weil die die Rohre durchströmenden Abgase eine höhere Temperatur aufweisen als das den Gehäusemantel umspülende Kühlmittel. Dadurch treten unterschiedliche Dehnungen zwischen Rohrbündel und Gehäusemantel auf, was zu thermisch bedingten Spannungen, d. h. Druckspannungen in den Rohren und Zugspannungen im Gehäusemantel sowie Biegespannungen in den Rohrböden führt. Die Rohre des Rohrbündels, die die Rohrenden aufnehmenden Rohrböden und der Gehäusemantel bilden somit einen in sich geschlossenen Kraftfluss, bei dem sich die Rohre über die Rohrböden am Gehäusemantel abstützen. Insbesondere bei Abgaskühlem großer Länge, wie sie bei Nutzkraftfahrzeugen eingesetzt werden, können die auftretenden Spannungen aufgrund der unterschiedlichen Dehnungen zum Versagen einzelner Bauteile oder zur Zerstörung der Rohrbodenverbindung führen.

Aufgabe der vorliegenden Erfindung ist es, diese thermisch bedingten Spannungen abzubauen, d. h. die daraus resultierenden Beanspruchungen in den Bauteilen des Abgaswärmeübertragers herabzusetzen, um damit eine größere Sicherheit und höhere Lebensdauer für den eingangs genannten Abgaswärmeübertrager zu erreichen.

Die Lösung dieser Aufgabe besteht gemäß Anspruch 1 darin, dass innerhalb des Kraftflusses ein Schiebesitz angeordnet ist, d- h. ein Sitz von zwei Bauteilen, die relativ zueinander gleiten können, also ein so genanntes Loslager im Gegensatz zum Festlager, wie es beim gattungsgemäßen Stand der Technik vorhanden ist. Durch einen solchen Schiebesitz werden die unterschiedlichen Dehnungen von Rohrbündel und Gehäuse ausgeglichen, d. h. die erwähnten Spannungen treten erst gar nicht auf. Der Schiebesitz kann konstruktiv an jeder beliebigen Stelle des Kraftflusses eingebaut werden, wobei nach Möglichkeit vermieden werden muss, dass sich Kühlmittel und Abgas miteinander mischen - letzteres könnte zu Motorschäden führen.

Nach der Erfindung ist der Schiebesitz im Gehäuse angeordnet. Diese Lösung hat den Vorteil, dass retativ großflächige Gleitflächen zur Verfügung stehen und dass keine Gefahr besteht, dass sich das Kühlmittel bei einer Leckage durch den Schiebesitz mit dem Abgas mischt oder umgekehrt. Der Gehäusemantel ist quer zur Kraftflussrichtung geteilt, und beide Gehäuseteile sind teleskopartig zusammengesetzt, so dass sie bei stärkerer Ausdehnung des Rohrbündels auseinander gezogen werden, ohne dass Spannungen im Gehäusemantel, im Rohrboden oder im Rohrbündel auftreten.

Nach einer vorteilhaften Weiterbildung besteht der Schiebesitz aus einem Außen- und einem Innenring, zwischen denen eine Kunststoffgleitschicht zur Verbesserung der Gleiteigenschaften angeordnet ist. Beide Ringe werden als vorgefertigter Schiebesitz auf die Endbereiche der Gehäuseteile aufgeschoben und vorzugsweise mit diesen verklebt Durch das Verkleben werden ein zu starker Wärmeeintrag und damit ein eventuelles Verziehen der Bausteile vermieden. Das Aufsetzen und Verkleben von Innen- und Außenring ist insbesondere bei einer etwas zerklüfteten Kontur des Gehäusemantels vorteilhaft: die aufeinander gleitenden Flächen von Innen-und Außenring können als einfache, gut abzudichtende Konturen, z. B. als Polygonkontur gestaltet werden.

Ausführungsbeispiele der Erfindung sind in der Zeichnung dargestellt und werden im Folgenden näher beschrieben. Es zeigen
- Fig. 1: eine perspektivische Ansicht eines Abgaskühlers mit Schiebesitz im Gehäusemantel,
- Fig. 2: den Abgaskühler gemäß Fig. 1 im Längsschnitt.
- Fig. 2a: eine Seitenansicht des Abgaskühlers gemäß Fig. 2,
- Fig. 2b: einen Schnitt durch den Abgaskühler gemäß Fig. 2 in der Schnittebene IIb-IIb,
- Fig. 2c: den Schiebesitz als Einzelheit, und
- Fig.3: eine schematische Darstellung der Spannungen in einem Abgaskühler nach dem Stand der Technik.

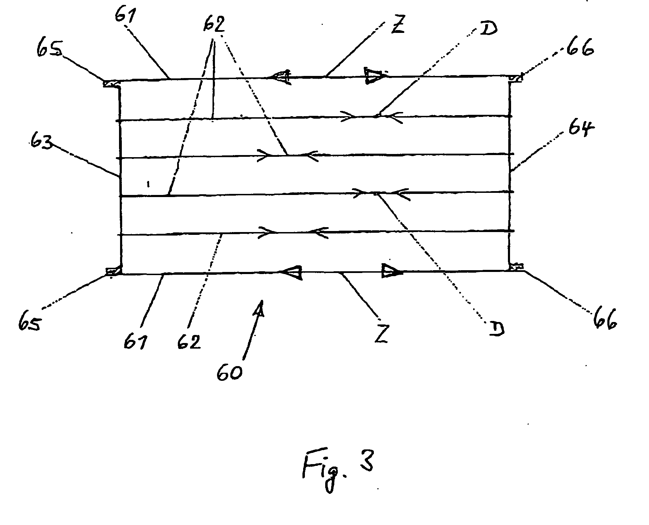

Anhand der **Fig. 3** soll zunächst auf die Spannungsverhältnisse in einem von Kühlmittel gekühlten Abgaskühler nach dem Stand der Technik eingegangen werden. Diese schematische Darstellung entspricht einem Abgaskühler gemäß dem eingangs genannten Stand der Technik der Anmelderin. Ein solcher bekannter Wärmeübertrager 60 besteht aus einem Gehäusemantel 61, der ein aus Rohren 62 bestehendes Rohrbündel aufnimmt, deren Enden In Rohrböden 63, 64 aufgenommen sind. Die Rohre 62 sind beiderseits fest und dicht mit den Rohrböden 63, 64 verbunden, z. B. durch Schweißverbindungen. Die Rohrböden 63, 64 sind umfangseitig über Schweißverbindungen 65, 66 mit dem Gehäusemantel 61 fest verbunden. Insofern bilden beiden Rohrböden 63, 64 mit dem Gehäusemantel 61 zwei Festlager. Beim Betrieb eines solchen Abgaskühlers 60 werden die Rohre 62 von heißem Abgas durchströmt, während die Innenseite des Gehäusemantels 61 von Kühlmittel erheblich niedrigerer Temperatur beaufschlagt wird. Dadurch ergeben sich unterschiedliche Dehnungen zwischen den Rohren 62 und dem Gehäusemantel 61. Daher bilden sich in den Rohren 62 Druckspannungen aus, die durch gegeneinander gerichtete Pfeile und den Buchstaben D (Druck) gekennzeichnet sind. Diese Druckspannungen setzen sich über die Rohrböden 63, 64 und die Schweißverbindungen 65, 66 auf den Gehäusemantel 61 fort, in weichem sich dann eine Zugspannung ausbildet, die durch den Buchstaben Z (Zug) und voneinander wegweisende Pfeile gekennzeichnet ist. Die Zugspannungen Z und die Druckspannungen D bilden somit über die Rohrböden 63, 64, in welchen nicht dargestellte Biege- und Schubspannungen auftreten, einen In sich geschlossenen Kraftfluss oder Kraftflussring.

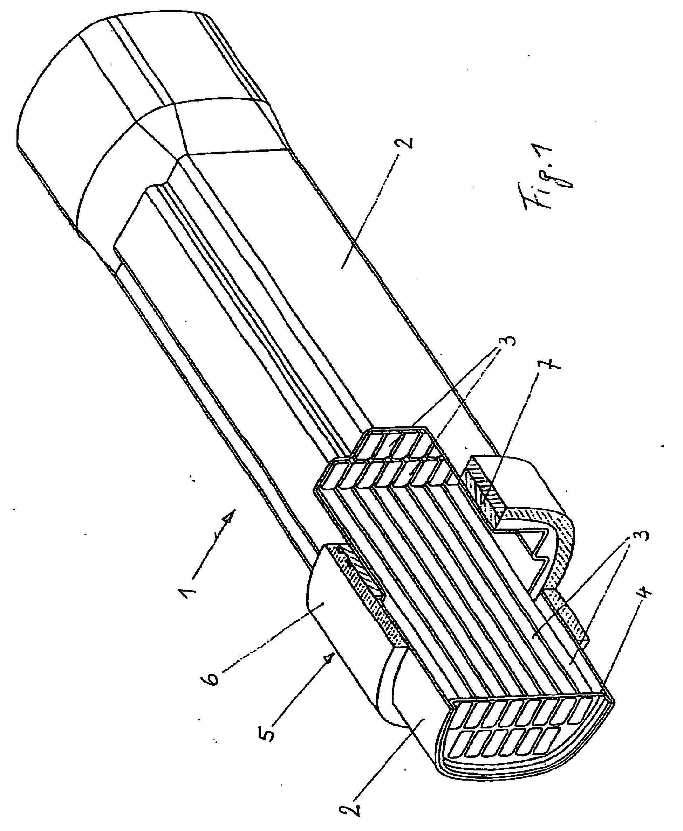

**Fig. 1** zeigt eine perspektivische Ansicht eines Abgaskühlers 1 für ein Kraftfahrzeug mit Abgasrückführung (AGR). Derartige Abgaskühler dienen der Rückkühlung der heißen Abgase eines nicht dargestellten Verbrennungsmotors, bevor diese mit der Ansaugluft zusammengeführt und dem Ansaugtrakt des Verbrennungsmotors zugeführt werden. Der Abgaskühler 1 besteht aus einem Gehäusemantel 2, der ein aus Abgasrohren 3 bestehendes Rohrbündel in sich aufnimmt. Die Enden der Rohre 3 sind in einem Rohrboden 4 befestigt, der seinerseits mit dem Gehäusemantel 2 verschweißt ist. Der Gehäusemantel 2 weist einen Schiebesitz 5 auf, der aus einem Außenring 6 und einem Innenring 7 besteht.

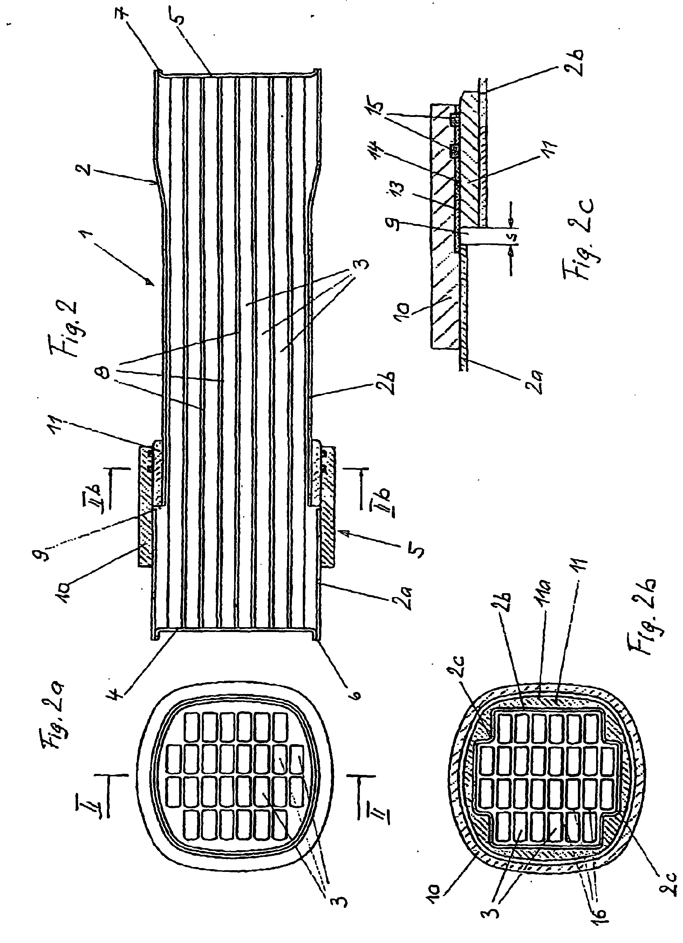

**Fig. 2** zeigt den Abgaskühler 1 gemäß Fig. 1 in einer Schnittdarstellung, d. h. in einem Längsschnitt durch die Abgasrohre 3, die endseitig in den beiden Rohrböden 4 und 5 aufgenommen, d. h. z. B. mittels einer Schweißverbindung mit den Rohrböden 4, 5 verbunden sind. Letztere sind über Schweißverbindungen 6, 7 umfangseitig mit dem Gehäusemantel 2 fest und flüssigkeitsdicht verbunden. Durch die Abgasrohrer 3 strömt Abgas des nicht dargestellten Verbrennungsmotors, und um die Abgasrohre 3, d. h. durch die zwischen ihnen belassenen Spalte 8 strömt Kühlmittel, welches dem nicht dargestellten Kühlmittelkreislauf des Verbrennungsmotors entnommen wird. Die Anschlüsse für den Zu- und Abfluss des Kühlmittels für den Gehäusemantel 2 sind der Einfachheit halber hier nicht dargestellt. Das Gehäuse 2 besteht aus zwei Gehäuseteilen 2a und 2b, welche eine Trennstelle 9 aufweisen. Im Bereich dieser Trennstelle 9 weist der in der Zeichnung rechts angeordnete Gehäuseteil 2b einen geringeren Querschnitt als der in der Zeichnung links dargestellte Gehäuseteil 2a auf. Auf dem Gehäuseteil 2a ist ein Außenring 10 und auf dem Gehäuseteil 2b ein Innenring 11 befestigt. Der Außenring 10 und der Innenring 11 bilden zusammen den Schiebesitz 5, der als Einzelheit in Fig. 2c dargestellt ist

**Fig. 2c** zeigt die Endbereiche der Gehäuseteile 2a, 2b im Bereich der Trennstelle 9, wobei die Stirnseiten der Gehäuseteile 2a, 2b durch einen Spalt s voneinander beabstandet sind. Auf dem Gehäuseteil 2b ist der Innenring 11 durch Kleben befestigt, und auf dem Gehäuseteil 2a ist der Außenring 10 durch eine Klebverbindung befestigt. Der Außenring 10 überlappt den Innenring 11 und bildet mit diesem einen Gleitsitz 13. Auf der Innenfläche des Außenringes 10 ist im Bereich des Gleitsitzes 13 eine Kunststoffschicht 14 fest aufgebracht Die Außenseite des Innenringes 11 dagegen ist metallisch glatt, z. B. geschliffen. Dadurch ergibt sich für den Gleitsitz 13 eine reibungsarme Gleitpaarung zwischen der Kunststoffschicht 14 und der metallischen Oberfläche des Innenringes 11. Der Gleitsitz 13 ist durch zwei O-Ringe 15 nach außen, d. h. zur Atmosphäre hin abgedichtet, damit kein Kühlmittel nach außen entweichen kann.

**Fig. 2a, 2b** zeigen den Querschnitt des Abgaskühlers 1 als Ansicht und als Schnitt. Man erkennt, dass die Rohre 3 einen rechteckigen Querschnitt und etwa gleiche Abstände 16 zueinander aufweisen. Aufgrund dieser Anordnung der Rohre 3 ergibt sich für die Kontur des Gehäusemantels 2b ein etwa rechteckförmiger Verlauf mit Absätzen 2c. Dieser etwas zerklüfteten, durch die Absätze 2c angewinkelten Kontur ist die Kontur des Innenringes 11 angepasst. Die Außenkontur 11a des Innenringes dagegen ist geglättet und weist einen etwa polygonförmigen Verlauf ohne starke Krümmungen auf, diese Oberfläche ist daher relativ einfach als glatte Fläche herstellbar und mit einfachen Mittteln wie z. B. O-Ringen 15 gegenüber der Innenfläche des Außenringes 10 abdichtbar.

Außenring 10 und Innenring 11, Kunststoffgleitschicht 14 und O-Ringe 15 können zusammen als vorgefertigte Baueinheit, d. h. als vorgefertigter Schiebesitz 5 hergesteltt und anschließend durch die bereits erwähnte Klebverbindung mit den Gehäuseteilen 2a, 2b verbunden werden.

Beim Betrieb des Abgaskühlers 1 ist aufgrund des Schiebesitzes 5 gewährleistet, dass das Gehäuse 2 bzw. die Gehäuseteile 2a, 2b der stärkeren Ausdehnung der Rohre 3 durch Relativbewegung gegeneinander folgen können - Thermospannungen und Überbeanspruchungen der Bauteile werden somit vermieden.

## Patentansprüche

1. Abgaswärmeübertrager, insbesondere für Kraftfahrzeuge mit Abgasrückführung (AGR), bestehend aus einem Gehäusemantel für ein Kühlmittel und aus einem von Abgas durchströmten, vom Kühlmittel umströmten Rohrbündel, welches über Rohrböden im Gehäuse aufgenommen wird, wobei Rohrbündel, Rohrböden und Gehäuse einen In sich geschlossen Kraftfluss bilden, wobei im Kraftfluss ein Schiebesitz angeordnet ist, **dadurch gekennzeichnet, dass** der Schiebesitz (5) im Gehäusemantel (2) angeordnet ist.

2. Abgaswärmeübertrager nach Anspruch 1, **dadurch gekennzeichnet, dass** der Gehäusemantel (2) quer zur Kraftflussrichtung geteilt und einen Endbereich (2a, 10) größeren Querschnittes und einen Endbereich (2b, 11) kleineren Querschnittes aufweist, die sich in Kraftflussrichtung überlappen und gleitend ineinander geführt und abgedichtet sind.

3. Abgaswärmeübertrager nach Anspruch 2, **dadurch gekennzeichnet, dass** zwischen den Endbereichen (10, 11) eine Kunststoffschicht (14) als Gleitschicht angeordnet ist.

4. Abgaswärmeübertrager nach einem der Ansprüche 2 und 3, **dadurch gekennzeichnet, dass** zwischen den Endbereichen (10, 11) Dichtmittel (15) angeordnet sind.

5. Abgaswärmeübertrager nach Anspruch 4, **dadurch gekennzeichnet, dass** die Dichtmittel als O-Ringe (15) ausgebildet sind.

6. Abgaswärmeübertrager nach einem der Ansprüche 2 bis 5, **dadurch gekennzeichnet, dass** die Endbereiche (2a, 2b) durch einen Außenring (10) und einen Innenring (11) gebildet werden, deren Wandstärke größer als die des Gehäusemantels (2) ist.

7. Abgaswärmeübertrager nach einem der Ansprüche 3 bis 6, **dadurch gekennzeichnet, dass** die Kunststoffschicht (14) am Außenring (10) fest haftend aufgebracht ist und dass der Innenring (11) eine metallisch glatte Oberfläche aufweist und mit der Kunststoffschicht (14) einen Gleitsitz (13) bildet.

8. Abgaswärmeübertrager nach einem der Ansprüche 6 und 7, **dadurch gekennzeichnet, dass** der Außenring (10) und der Innenring (11) auf die Gehäuseteile (2a, 2b) aufgeklebt sind.

9. Abgaswärmeübertrager nach einem der Ansprüche 6 bis 8, **dadurch gekennzeichnet, dass** der Außenring (10), der Innenring (11) die Kunststoffschicht (14) und die O-Ringe (15) als vorgefertigter Schiebesitz (5) ausgebildet sind, der anschließend mit den Endbereichen der Gehäuseteile (2a, 2b) verbunden wird.

## Claims

1. Exhaust gas heat exchanger, in particular for motor vehicles with exhaust gas recirculation (EGR), consisting of a housing jacket for a coolant and of a bundle of tubes through which exhaust gas flows and around which coolant flows and which is received via tube plates in the housing, wherein the tube bundles, tube plates and the housing form a self-enclosed power flow, a slide seat being arranged in the power flow, **characterised in that** the slide seat (5) is arranged in the housing jacket (2).

2. Exhaust gas heat exchanger according to claim 1, **characterised in that** the housing jacket (2) is divided transversely to the power flow direction and has an end region (2a, 10) with a larger cross section and an end region (2b, 11) with a smaller cross section which overlap in the power flow direction and are guided into one another in a sliding manner and sealed.

3. Exhaust gas heat exchanger according to claim 2, **characterised in that** a plastics material layer (14) is arranged as a slide layer between the end regions (10, 11).

4. Exhaust gas heat exchanger according to either of claims 2 or 3, **characterised in that** sealing means (15) are arranged between the end regions (10,11).

5. Exhaust gas heat exchanger according to claim 4, **characterised in that** the sealing rings are configured as O-rings (15).

6. Exhaust gas heat exchanger according to any of claims 2 to 5, **characterised in that** the end regions (2a, 2b) are formed by an outer ring (10) and an inner ring (11), the wall thickness of which is greater than that of the housing jacket (2).

7. Exhaust gas heat exchanger according to any one of claims 3 to 6, **characterised in that** the plastics material layer (14) is applied so as to firmly adhere on the outer ring (10) and **in that** the inner ring (11) has a metallic smooth surface and with the plastics material layer (14) forms a sliding seat (13).

8. Exhaust gas heat exchanger according to either of claims 6 or 7, **characterised in that** the outer ring (10) and the inner ring (11) are glued onto the housing parts (2a, 2b).

9. Exhaust gas heat exchanger according to any one of claims 6 to 8, **characterised in that** the outer ring (10), the inner ring (11), the plastics material layer (14) and the O-rings (15) are configured as a prefabricated slide seat (5), which is then connected to the end regions of the housing parts (2a, 2b).

## Revendications

1. Échangeur de chaleur de gaz d'échappement, en particulier pour des véhicules automobiles avec recyclage des gaz d'échappement (AGR), comprenant une enveloppe de boîtier pour un réfrigérant et un faisceau tubulaire traversé par les gaz d'échappement et entouré par le réfrigérant, qui est réceptionné au moyen de plaques tubulaires dans le boîtier, les faisceaux tubulaires, les plaques tubulaires et le boîtier formant un flux de convection forcée fermé sur lui-même, un siège coulissant étant disposé dans le flux de convection forcée, **caractérisé en ce que** le siège coulissant (5) est disposé dans l'enveloppe de boîtier (2).

2. Échangeur de chaleur de gaz d'échappement selon la revendication 1, **caractérisé en ce que** l'enveloppe de boîtier (2) est divisée transversalement au sens du flux de convection forcée et présente une zone d'extrémité (2a, 10) de section plus grande et une zone d'extrémité (2b, 11) de section plus petite, qui se chevauchent dans le sens du flux de convection forcée, sont guidées en glissant l'une dans l'autre et sont rendues étanches.

3. Échangeur de chaleur de gaz d'échappement selon la revendication 2, **caractérisé en ce qu'**une couche plastique (14) est disposée comme couche de glissement entre les zones d'extrémité (10, 11)

4. Échangeur de chaleur de gaz d'échappement selon l'une quelconque des revendications 2 et 3, **caractérisé en ce que** des moyens d'étanchéité (15) sont disposés entre les zones d'extrémité (10, 11).

5. Échangeur de chaleur de gaz d'échappement selon la revendication 4, **caractérisé en ce que** les moyens d'étanchéité sont conçus comme des joints toriques (15).

6. Échangeur de chaleur de gaz d'échappement selon l'une quelconque des revendications 2 à 5, **caractérisé en ce que** les zones d'extrémité (2a, 2b) sont fermées par une bague extérieure (10) et une bague intérieure (11), dont l'épaisseur de paroi est plus grande que celle de l'enveloppe de boîtier (2).

7. Échangeur de chaleur de gaz d'échappement selon l'une quelconque des revendications 3 à 6, **caractérisé en ce que** la couche plastique (14) est appliquée en adhérant fermement sur la bague extérieure (10) et **en ce que** la bague intérieure (11) présente une surface lisse au plan métallique et forme avec la couche plastique (14) un siège coulissant (13).

8. Échangeur de chaleur de gaz d'échappement selon l'une quelconque des revendications 6 et 7, **caractérisé en ce que** la bague extérieure (10) et la bague intérieure (11) sont collées sur les parties de boîtier (2a, 2b).

9. Échangeur de chaleur de gaz d'échappement selon l'une quelconque des revendications 6 à 8, **caractérisé en ce que** la bague extérieure (10), la bague intérieure (11), la couche plastique (14) et les joints toriques (15) sont conçus comme un siège coulissant (5) préfabriqué, qui est relié ensuite aux zones d'extrémité des parties de boîtier (2a, 2b).
